# EUROPEAN PATENT APPLICATION

(11) **EP 1 724 211 A1**
(43) Date of publication of application: **22.11.2006**
(21) Application number: 05720666.6
(22) Date of filing: 08.03.2005
(51) Int. Cl.: B65D 85/57

(54) **DISK STORAGE CASE AND RECORDING MEDIUM**

(30) Priority: 11.03.2004 JP 2004068502
(71) Applicant: SONY CORPORATION, Tokyo 141-0001 (JP)
(72) Inventor: Kinoshita, Takashi, Shinagawa-ku, Tokyo 141-0001 (JP); Sato, Takashi, Shinagawa-ku, Tokyo 141-0001 (JP); Toriyama, Mitsuru, Shinagawa-ku, Tokyo 141-0001 (JP); Noda, Toyokazu, Shinagawa-ku, Tokyo 141-0001 (JP); Koyata, Tomohiro, Shinagawa-ku, Tokyo 141-0001 (JP); Oka, Koichi, Shinagawa-ku, Tokyo 141-0001 (JP); Iida, Azumi, Shinagawa-ku, Tokyo 141-0001 (JP); Takada, Toshimi, Shinagawa-ku, Tokyo 141-0001 (JP)
(74) Representative: Mills, Julia
(86) International application number: PCT/JP2005/004395
(87) International publication number: WO 2005/087621

(57) **Abstract**

The present invention is applied to a disk storage case adapted to store and carry, for example, a disk-shaped recording medium and to the recording medium, wherein the disk-shaped recording medium 21 is clamped and held from one surface and the other surface to be stored to prevent stress from being applied to the relevant recoding medium 21 when the recording medium 21 is stored and removed.

## Description

### Background of the Invention

### Technical Field

The present invention relates to a disk storage case and a recording medium, and can be applied to a disk storage case adapted to store and carry, for example, a disk-shaped recording medium and to the disk-shaped recording medium. According to the present invention, by clamping and holding the disk-shaped recording medium from one surface and the other surface thereof to store, stress is prevented from being applied to the relevant recording medium when the recording medium is stored and removed, so that the recording medium can be easily and securely stored and removed.

### Background Art

Conventionally, in a disk storage case that stores a disk-shaped recording medium such as a CD (Compact Disk) and a DVD (Digital Versatile Disk) when it is not used, a center hole provided at a central portion of the disk-shaped recording medium is held by a chuck portion provided in the disk storage case to hold the disk-shaped recording medium.

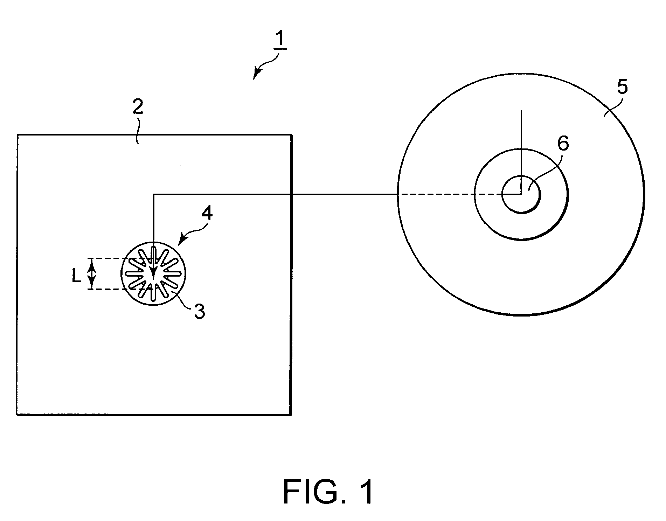

More specifically, in the disk storage case, as shown in Fig. 1, there is provided the chuck portion 4 in which a plurality of projecting portions 3 are arranged circumferentially by molding them integrally with a case body 2 is provided at a central portion of a case interior bottom surface of the case body 2 formed by resin-molding.

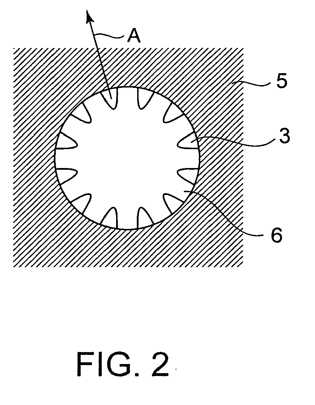

The chuck portion 4 is formed so that a diameter L thereof is a slightly larger than a diameter of a center hole 6 of the disk-shaped recording medium 5, and the plurality of projecting portions 3 provided in the chuck portion 4 each warp outward and inward. With this arrangement, as shown in Fig. 2, when the center hole 6 of the disk-shaped recording medium 5 is fitted into the chuck portion 4, the respective projecting portions 3 warp and press the center hole 6 from the inner side toward the outer side as indicated by arrow A to hold the disk-shaped recording medium 5.

In the disk storage case 1 having such a construction, there has been a problem that the respective projecting portions 3 of the chuck portion 4 are formed thinly to thereby warp, and that as a result, the projecting portions 3 are easily damaged, and that when they are damaged, it becomes difficult to sufficiently press the center hole 6 of the disk-shaped recording medium 5 from the inner side, so that the disk-shaped recording medium 5 held by the chuck portion 4 inside of the case body 2 easily turns, which scratches a disk surface.

Similarly, in the case where the diameter L is not enough due to insufficient molding accuracy of the chuck portion 4, there has been a problem that it is difficult to sufficiently press the center hole 6 of the disk-shaped recording medium 5 from the inner side, so that the disk-shaped recording medium 5 held by the chuck portion 4 inside of the case body 2 easily turns, which scratches the disk surface.

On the contrary, in the case where the diameter L of the chuck portion 4 is too large, there has been a problem that it is difficult to fit the center hole 6 of the disk-shaped recording medium 5, or that even if it is possible to fit it, the center hole 6 of the disk-shaped recording medium 5 is pressed strongly by the chuck portion 4, and when the disk-shaped recording medium 5 is removed from the case body 2, a strong stress is applied to the disk-shaped recording medium 5, which causes a scratch, a crack and the like.

With regard to this type of disk storage case, for example, Japanese Patent Application Publication No. 2003-160187 has disclosed a method in which for a holding case, a fixing case is provided so as to be openable and closable with a hinge, and by placing a disk-shaped recording medium on an elastic body of the holding case and then, closing the fixing case, whereby the disk-shaped recording medium is held by a holder portion provided in the fixing case. According to this method, the storage work into the disk storage case can be simplified.

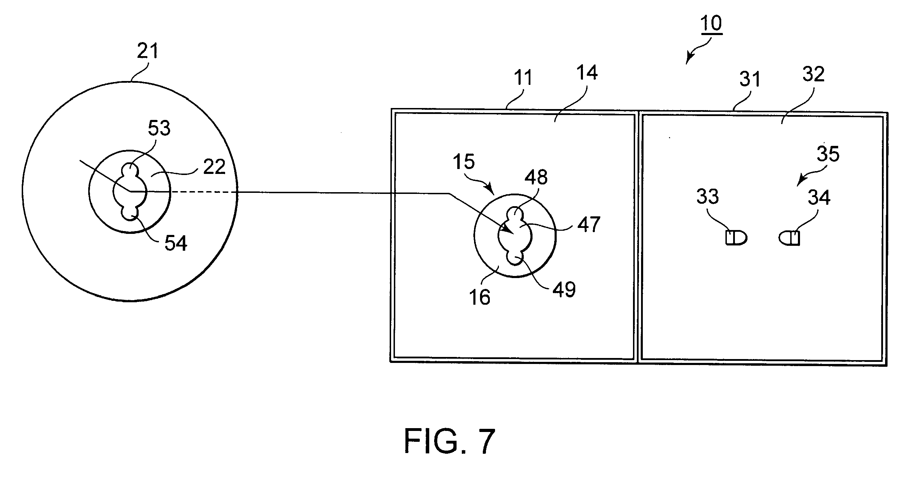

However, in the disk storage case disclosed in Japanese Patent Application Publication No. 2003-160187, there has been a problem that since the center hole of the disk-shaped recording medium is pressed from the inner side by the holder portion similarly to the case of the disk storage case 2 shown in Fig. 7, force pressing the disk-shaped recording medium is insufficient or excessive depending on molding accuracy of the holder portion.

### Disclosure of the Invention

The present invention is achieved in consideration of the above-described points, and is intended to propose a disk storage case and the recording medium that allow a disk-shaped recording medium to be easily and securely stored by effectively avoiding making scratches on the disk-shaped recording medium.

In order to solve the problems, the present invention is applied to a disk storage case having an approximately box-shaped first case that stores a disk-shaped recording medium and a second case that is pivotally supported by the first case so as to turn freely and makes it difficult to remove the recording medium stored in the first case by closing the opening of the first case. The first case includes a supporting portion at an interior bottom surface for supporting one surface of the recording medium and supports the one surface of the recording medium by the supporting portion so that the one surface is opposed to the interior bottom surface, and the second case includes clamping and holding means for clamping and holding the recording medium supported by the supporting portion between the supporting portion and itself.

Since the construction of the present invention is applied to a disk storage case having an approximately box-shaped first case that stores a disk-shaped recording medium and a second case that is pivotally supported by the first case so as to turn freely and makes it difficult to remove the recording medium stored in the first case by closing the opening of the first case, and the first case includes a supportingportion in an interiorbottom surface for supporting one surface of the recording medium and supports the one surface of the recording medium by the supporting portion so that the one surface is opposed to the interior bottom surface, and the second case includes clamping and holding means for clamping and holding the recording medium supported by the supporting portion between the supporting portion and itself. Accordingly, stress can be prevented from being applied when the recording medium is stored and the removed, and the recording medium can be easily and securely stored and removed, as compared with the case where the center hole of the recording medium is pressed from the inner side.

Furthermore, according to the present invention, in a recording medium that is formed into a disk shape having a center hole, is provided with a recording area on at least one surface, and is stored and kept in a predetermined storage case, the recording medium includes an engagement portion with which positioning means of the storage case is engaged, in a part other than the recording area.

Since the construction of the present invention is applied to a recording medium that is formed into a disk shape having a center hole, is provided with a recording area on at least one surface, and is stored and kept in a predetermined storage case, and the recording medium includes an engagement portion with which positioning means of the storage case is engaged, in a part other than the recording area, the engagement with an engagement portion of the storage case can restrict the motion in a turning direction to perform positioning when the recording medium is stored in the storage case.

According to the present invention, the stress can be prevented from being applied to the recording medium when the recording medium is stored and removed, so that the recording medium can be easily and securely stored and removed.

### Brief Description of Drawings

Fig. 1 is a plane view showing a conventional disk storage case.
Fig. 2 is a partial plane view showing a state of a recording medium held by the conventional disk storage case.
Fig. 3 is a perspective view showing a disk storage case and a recording medium according to an embodiment of the present invention.
Figs. 4(A) and 4(B) are a plane view and a side view showing the disk storage case of Fig. 3.
Figs. 5(A) and 5(B) are a plane view and a side view showing the disk storage case of Fig. 3.
Fig. 6 is side views of the disk storage case of Fig. 3.
Fig. 7 is a plane view showing a disk storage case and a disk-shaped recording medium according to another embodiment.

### Best Mode for Carrying out the Invention

Hereinafter, with reference to the drawings as necessary, embodiments of the present invention are described in detail.

### (1) Construction of Embodiment

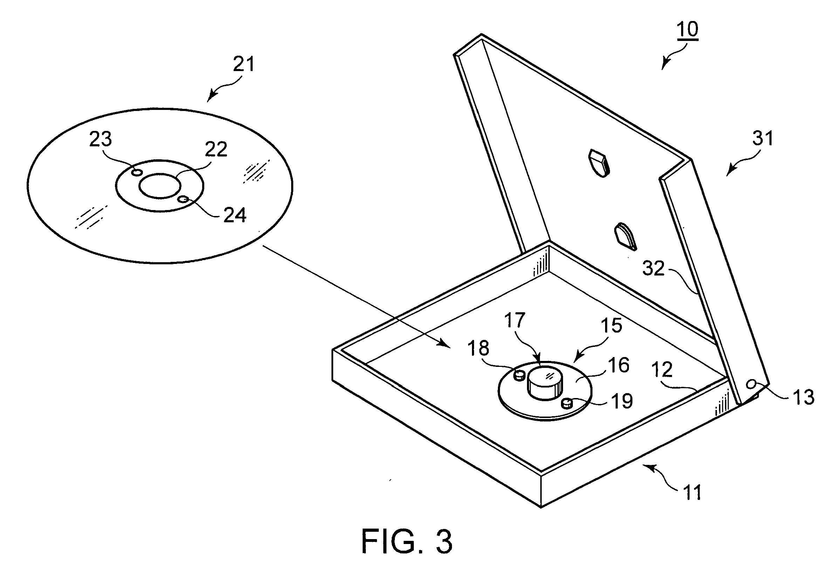

Fig. 3 is a perspective view showing a disk storage case 10 according to the present invention and a disk-shaped recording medium 21 stored in this disk storage case 10. This disk storage case 10 stores the disk-shaped recording medium 21 in the lower case 11, and clamps and holds this disk-shaped recording medium 21 between a lower case 11 and the upper case 31.

More specifically, the lower case 11 is formed of a hard resin material or the like into a box shape having wall surface portions 12 formed circumferentially, and the upper case 31 is pivotally supported with respect to this lower case 11 by hinges 13 provided in the wall surface portions 12. The upper case 31 is formed of a hard resin material or the like into an approximately box shape having wall surface portions 32 formed in three directions, and by turning the upper case 31 with the hinges 31 used as turning centers, the upper portion of the lower case 11 is put into a closed state or in an opened state.

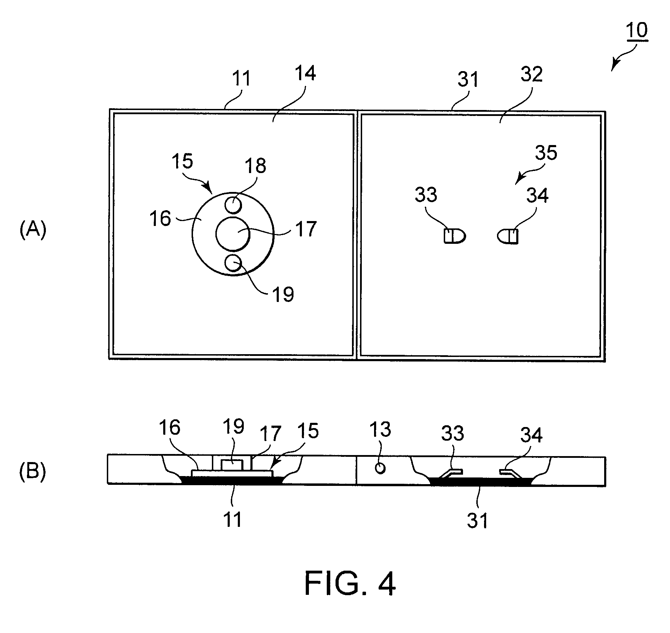

Fig. 4 (A) is a plane view showing a state in which the lower case 11 and the upper case 31 are opened, and showing both an interior surface portion of the lower case 11 and an interior surface portion of the upper case 31. Fig. 4 (B) is a side view of the disk storage case 10 of Fig. 4(A).

As shown in Figs. 4 (A) and 4 (B), in the lower case 11, a circular base 15 is formed at the approximately center of a box-shaped interior bottom surface 14 thereof, and in a top surface portion 16 is formed a cylindrical center guide 17 with a diameter equal to, or a slightly smaller than a bore diameter of a center hole 22 (Fig. 3) of the disk-shaped recording medium 21. With this arrangement, when the disk-shaped recording medium 21 is stored in the lower case 11, the disk-shaped recording medium 21 is placed on the top surface portion 16 of the base 15 such that the center guide portion 17 is inserted into the centerhole 22 of the disk-shaped recording medium 21, which allows the positioning of the storage of the disk-shaped recording medium 21 inside of the lower case 11.

Furthermore, in the top surface portion 16 of the base 15, cylindrical projecting portions for positioning 18, 19 that restrict the motion of the disk-shaped recording medium 21 in the turning direction to perform positioning are formed. These projecting portions for positioning 18, 19 are provided at positions corresponding to positioning holes 23, 24 that are provided on the outer side of the center hole 22 of the disk-shaped recording medium 21, and are each formed with a diameter equal to, or a slightly smaller than a bore diameter of each of these positioning holes 23, 24. With this arrangement, the disk-shaped recording medium 21 is placed on the top surface portion 16 of the base 15 such that these projecting portions for positioning 18, 19 are inserted into the positioning holes 23, 24 of the disk-shaped recording medium 21, which can restrict the motion of the disk-shaped recording medium 21 stored in the disk storage case 10 in the turning direction to perform the positioning.

In this case, in the disk storage case 10, the center guide portion 17 provided in the base 15 of the lower case 11 is formed so as to have a height that is larger than a thickness of the disk-shaped recording medium 21 and is enough to almost come into contact with the upper surface portion of the upper case 31 when the upper case 31 is closed. Moreover, the projecting portions for positioning 18, 19 provided with the center guide portion 17 are formed so as to be lower than the center guide portion 17. With this arrangement, when the disk-shaped recording medium 21 is placed on the base 15, the disk-shaped recording medium 21 is turned in the turning direction with the center hole 22 of the disk-shaped recording medium 21 inserted into the center guide portion 17, which allows the positioning holes 23, 24 of the disk-shaped recording medium 21 to be easily coupled to the projecting portions for positioning 18, 19.

Furthermore, in the upper case 31, a clamp portion 35 composed of plate-spring-shaped pressing portions 33, 34 is provided in a part of an interior upper surface portion 32 by molding integrally with the upper case 31. Theclampportion 35 directly presses a surface portion of the outer side of the center hole 22 of the disk-shaped recording medium 21 placed on the base 15 in a state of closing the upper case 31 to clamp and hold the disk-shaped recording medium 21 between the clamp portion 35 and the base 15. With this arrangement, the clamp portion 35 is formed at a position that corresponds to the top surface portion 16 of the base 15 and avoids the positions corresponding to the center guide portion 17 and the projecting portions for positioning 18, 19, which are provided in the base 15.

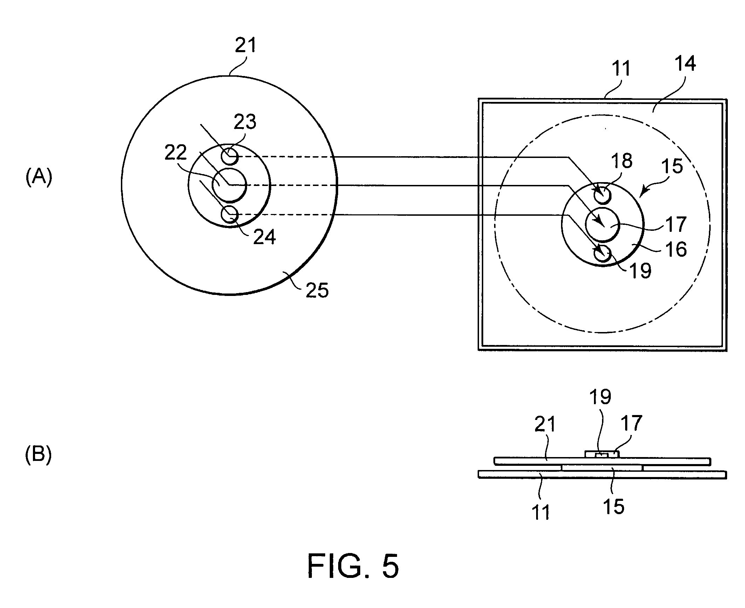

In this case, Fig. 5(A) is a plane view showing the disk-shaped recording medium 21 and the disk storage case 10, and Fig. 5(B) is a side view showing a state in which the disk-shaped recording medium 21 is placed on the base 15 of the lower case 11. As shown in Fig. 5 (A), in the disk-shaped recording medium 21, the circular center hole 22 penetrating from one surface to the other surface is provided at the central portion, and on the outer side, the two circular positioning holes 23, 24 each having a similar shape penetrating from the one surface to the other surface are provided at intervals of an angle of 180° with respect to each other. In this disk-shaped recording medium 21, on at least one surface is formed a recording area 25 away from the center hole 22 outward at a distance of a predetermined width, and the area between the center hole 22 and the recording area 25 is an area uninvolved in recording and reproduction. With this arrangement, in the disk-shaped recording medium 21, the positioning holes 23, 24 are formed in this area, and in the upper case 31 (Fig. 4), the pressing portions 33, 34 are provided at the positions corresponding to this area to press the relevant area. This arrangement can prevent scratches or the like from being caused on the recording area 25 when the disk-shaped recording medium 21 is stored in such a manner that the surface of the disk-shaped recording medium 21 where the recording area 25 is provided is pressed by the pressing portions 33, 34. The base 15 of the lower case 11 is formed with a diameter thereof set so as to avoid the recording area 25 of the disk-shaped recording medium 21, and thereby, even when the disk-shaped recording medium 21 is stored in such a manner that the surface on which the recording area 25 is provided faces the base 15, scratches or the like are prevented from being caused on the recording area 25.

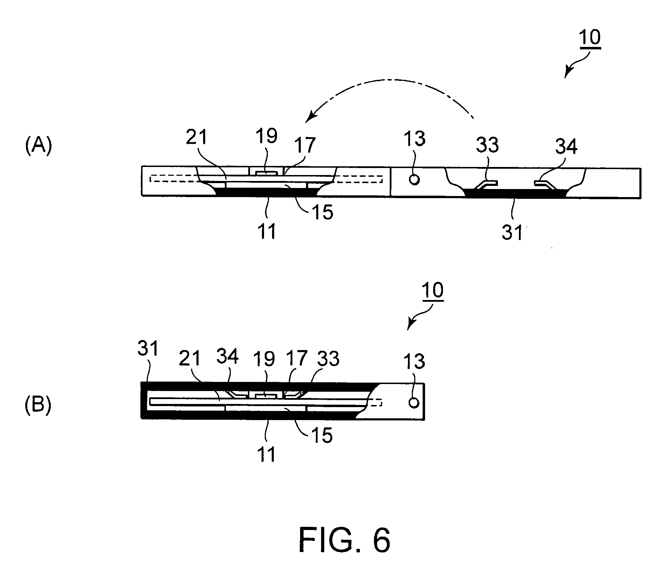

With this arrangement, as shown in Fig. 6(A), in the disk storage case 10, by closing the upper case 31 with the disk-shaped recording medium 21 placed on the base 15 of the lower case 11, as shown in Fig. 6 (B), the disk-shaped recording medium 21 is clamped and held between the pressing portions 33, 34 of the upper case 31 and the base 15, by which it can be held inside of the disk storage case 10.

With this arrangement, in this embodiment, the lower case 11 constitutes an approximately box-shaped first case that stores the disk-shaped recording medium, the upper case 31 constitutes a second case that is pivotally supported so as to turn freely and makes it difficult to remove the recording medium stored in the first case by closing an opening of the first case, the base 15 constitutes a supporting portion that supports one surface of the recording medium, and the clamp portion 35 composed of the pressing portions 33, 34 constitutes clamping and holding means for clamping and holding the recording medium supported by the supporting portion between the supporting portion and itself.

### (2) Operation of Embodiment

In the above-described construction, in this disk storage case 10, the stored disk-shaped recording medium 21 is held by clamping and holding the disk-shaped recording medium 21 by the base 15 of the lower case 11 and the clamp portion 35 of the upper case 31.

When this disk-shaped recording medium 21 is stored, the center guide portion 17 and the projecting portions for positioning 18, 19, which are provided in the top surface portion 16 of the base 15 of the lower case 11, are inserted into the center hole 22 and the positioning holes 23, 24 of the disk-shaped recording medium 21, respectively, to thereby place the disk-shaped recording medium 21 on the base 15. In this case, since the projecting portions for positioning 18, 19 are formed so as to be lower than the center guide portion 17, the center guide portion 17 is inserted into the center hole 22 of the disk-shaped recording medium 21, and then, the positioning holes 22, 23 of the disk-shaped recording medium 21 are caused to correspond to the projecting portions for positioning 18, 19, to drop the disk-shaped recording medium 21 down.

With this arrangement, the disk-shaped recording medium 21 is positioned inside of the lower case 11 by the center guide portion 17 inserted into the center hole 22, and the motion in the turning direction is restricted by the projecting portions for positioning 18, 19 inserted into the positioning holes 23, 24, so that the disk-shaped recording medium 21 is put into a state of being positioned in the turning direction.

In this case, the center guide portion 17 and the projecting portions for positioning 18, 19 are formed with diameters equal to, or a slightly smaller than those of the center hole 22 and the positioning holes 23, 24 of the disk-shaped recording medium 21, respectively, which allows the center guide portion 17 and the projecting portions for positioning 18, 19 to be easily inserted into the center hole 22 and the positioning holes 23, 24 when the disk-shaped recording medium 21 is placed on the top surface portion 16 of the base 15 while being positioned by the center guide portion 17 and the projecting portions for positioning 18, 19. This arrangement can prevent stress from being applied to the disk-shaped recording medium 21 when the disk-shaped recording medium 21 is stored.

Furthermore, when the upper case 31 is closed with the disk-shaped recording medium 21 positioned at the predetermined position of the lower case 11, the pressing portions 33, 34 of the clamp portion 35 of the upper case 31 press the surface portion of the outer side of the center hole 22 of the disk-shaped recording medium 21, by which the disk-shaped recording medium 21 is clamped and held by the base 15 and the clamp portion 35.

In this manner, the disk-shaped recording medium 21 stored in the disk storage case 10 is held in a state of being positioned at the predetermined position inside of the disk storage case 10 by the center guide portion 17 inserted into the center hole 22 while being clamped and held by the base 15 and the clamp portion 35, and is held in a state in which the motion in the turning direction is restricted by the projecting portions for positioning 18, 19 inserted into the positioning holes 23, 24. Accordingly, when the disk-shaped recording medium 21 is carried or the like, it does not move unexpectedly inside of the disk storage case 10 due to vibrations, whichcanprevent the surface frombeing scratched.

Furthermore, in this case, the disk-shaped recording medium 21 is positioned at a position oriented either in a predetermined direction or in a direction turned at 180° with respect to the disk storage case 10 by the projecting portions for positioning 18, 19. In other words, a label surface, on which a picture, letters and the like are printed, on the side opposite to the one surface on which the recording area 25 is providedis oriented either in the predetermined direction or in the direction turned at 180° with respect to the disk storage case 10.

Thus, by forming the lower case 11 and the upper case 31 of the disk storage case 10 of a transparent resin material to make the label surface of the disk-shaped recording medium 21 visible from the outside of the disk storage case 10, the picture, letters and the like on the label surface can be always seen at the predetermined angle or in the state turned at 180° with respect to the disk storage case 10 from the outside of the disk storage case 10. With this arrangement, if for the disk-shaped recording medium 21, the label surface is designed based on the position when the disk-shaped recording medium 21 is stored in the disk storage case 10, this label surface of the disk-shaped recording medium 21 can be used in place of a label paper of a conventional disk storage case. Also, since the disk-shaped recording medium 21 can be positioned in the turning direction, a label paper on which a predetermined picture and letters are printed is provided in a part of the lower case 11 and/or the upper case 31 by means of sticking or the like, so that both of the design of this label paper and the design of the label surface of the disk- shaped recording medium 21 can be seen in association from the outside.

On the other hand, when the disk-shaped recording medium 21 stored in the disk storage case 10 is removed, by opening the upper case 31, the disk-shaped recording medium 21 is released from being clamped and held by the clamp portion 35 and the base 15, and put into a state in which it is placed on the top surface portion 16 of the based 15 to be able to be picked up. By picking up the disk-shaped recording medium 21 along the center guide portion 17 in this state, it can be removed from the lower case.

In this case, since the center guide portion 17 and the projecting portions for positioning 18, 19 are formed with the diameters equal to, or a slightly smaller than those of the center hole 22 and the positioning holes 23, 24 of the disk-shaped recording medium 21, respectively, the center guide portion 17 and the projecting portions for positioning 18, 19 are easily pulled out of the center hole 22 and the positioning holes 23, 24 when the disk-shaped recording medium 21 is picked up from the top surface portion 16 of the base 15. This arrangement can prevent stress from being applied to the disk-shaped recording medium 21 when the disk-shaped recording medium 21 is removed.

With this arrangement, in this disk storage case 10, since the disk-shaped recording medium 21 is clamped and held from the one surface and the other surface thereof by the base 15 and the clamp portion 35, less stress is applied when the disk-shaped recording medium 21 is taken out or put in as compared with the case where the center hole 22 is pressed from the inner side, which can prevent the disk-shaped recording medium 21 from being damaged and which allows easy storage and removal.

Furthermore, since the motion in the turning direction of the disk-shaped recording medium 21 is restricted by the projecting portions for positioning 18, 19 to perform positioning, the disk-shaped recording medium 21 can be prevented from turning inside of the disk storage case 10 and being scratched on the surface, and the disk-shaped recording medium 21 can be always stored in the state in which the picture, letters and the like that are printed on the label surface of the disk-shaped recording medium 21 are oriented in the predetermined direction or in the direction turned at 180° with respect to the disk storage case 10.

Furthermore, since the stored disk-shaped recording medium 21 is positioned at the predetermined position inside of the disk storage case 10 by the center guide portion 17, and the motion in the turning direction is restricted by the projecting portions for positioning 18, 19, the surface portion of the disk-shaped recording medium 21 on the outer side of the center hole 22 only needs to be clamped with a comparatively weak force in clamping and holding the disk-shaped recording medium 21 by the clamp portion 35, which allows relatively simple-shaped pressing portions to be used as the pressing portions 33, 34 molded integrally with the upper case 31, and which makes it unnecessary to use high accuracy ones. This eases die machining involved in the manufacturing of the upper case 31, and also alleviates molding conditions.

### (3) Advantages of Embodiment

According to the above-described construction, since the disk-shaped recording medium 21 is clamped and held from the one surface and the other surface by the base 15 of the lower case and the pressing portions 33, 34 of the upper case, the stress is prevented from being applied to the disk-shaped recording medium 21 when the recording medium is stored and removed, which allows easy and secure storage and removal.

Furthermore, since the disk-shaped recording medium 21 is stored in such a manner that the center guide portion 17 formed in the top surface portion 16 of the base 15 of the lower case 11 is inserted into the center hole 22 of the disk-shaped recording medium 21, the storage of the disk-shaped recording medium 21 inside of the lower case 11 can be easily positioned.

Furthermore, since the disk-shaped recording medium 21 is stored in such a manner that the projecting portions for positioning 18, 19 formed in the top surface portion 16 of the base 15 of the lower case 11 are inserted into the positioning holes 23, 24 formed in the disk-shaped recording medium 21, the motion of the stored disk-shaped recording medium 21 in the turning direction can be restricted to perform the positioning, which can prevent the disk-shaped recording medium 21 from turning inside of the disk storage case 10 due to vibrations during being carried or the like, thereby preventing the surface from being scratched. Furthermore, in this case, the disk-shaped recording medium 21 can be stored such that the picture, letters and the like that are printed on the label surface of the disk-shaped recording medium 21 are oriented in the predetermined direction or in the direction turned at 180° with respect to the disk storage case 10.

### (4) Other Embodiments

While in the aforementioned embodiment, the case where the plate-spring-shaped parts molded integrally with the upper case 31 are used as the pressing portions 33, 34 of the upper case 31 is described, the present invention is not limited to this, but various means such as sticking an elastic member to the upper case 31 can be used as long as they are means for elasticity pressing the disk.

Furthermore, while in the aforementioned embodiment, the case where the storage of the disk-shaped recording medium 21 inside of the lower case 11 is positioned by the cylindrical center guide portion 17 is described, the present invention is not limited to this, but members having various shapes such as a column-like member having a semicircular cross section can be used as long as they are members that can be inserted into the center hole of the disk without resistance. Moreover, if a top surface portion of this center guide portion 17 is subjected to chamfering process, the disk-shaped recording medium 21 can be easily positioned at the predetermined position to place on the base 15.

Furthermore, while in the aforementioned embodiment, it is described the case where the disk-shaped recording medium 21 is positioned in the turning direction by the two projecting portions for positioning 18, 19 having the same shape, the present invention is not limited to this, but the two projecting portions for positioning may be formed with different diameters. In this case, if the two positioning holes 23, 24 of the disk-shaped recording medium 21 are correspondingly formed with different bore diameters, the disk-shaped recording medium 21 can be uniquely positioned in the turning direction. Alternatively, if the projecting portions for positioning 18, 19 are formed into the same shape, and a distance between the two projecting portions for positioning 18, 19 and the center guide portion 17 or a distance between angle intervals of the two projecting portions for positioning 18, 19 arranged on a circumference centering around the center guide portion 17 are different from each other, and the positioning holes 23, 24 of the disk-shaped recording medium 21 are formed to correspond to this arrangement, the disk-shaped recording medium 21 can also be uniquely positioned in the turning direction.

Furthermore, while in the aforementioned embodiment, it is described the case where the center guide portion 17 inserted into the center hole 22 of the disk-shaped recording medium 21 and the projecting portions for positioning 18, 19 that position the disk-shaped recording medium 21 in the turning direction are provided separately, the present invention is not limited to this, but they may be formed integrally. In this case, as shown in Fig. 7, projecting portions for positioning 48, 49 may be formed integrally on a peripheral side surface of a cylindrical center guide portion 47 provided in the top surface 16 of the base 15, and notches for positioning 53, 54 corresponding to the project ing port ions for positioning 48, 49 may be formed in a part of a center hole 52 of the disk-shaped recording medium 21. In Fig. 7, the same reference numerals are given to the portions corresponding to those of Fig. 3 and redundant description is omitted.

Thus, forming the center guide portion 47 and the projecting portions for positioning 48, 49 integrally can reduce the number of the parts and simplify the assembling process.

Furthermore, while in the aforementioned embodiment, it is described the case where the disk-shaped recording medium 21 is positioned in the turning direction by the two projecting portions for positioning 18, 19, the present invention is not limited to this, but the positioning in the turning direction may be performed by one projecting portion for positioning. In this case, one positioning hole is provided for the disk-shaped recording medium 21 to correspond the above arrangement, so that the position of the disk-shaped recording medium 21 in the turning direction can be uniquely determined.

Furthermore, while in the aforementioned embodiment, it is described the case where the storage of the disk-shaped recording medium 21 inside of the lower case 11 is positioned by the center guide portion 17, the present invention is not limited to this, but in place of the center guide portion 17, for example, a projection, a step or the like that positions anouterperipheralportionof the disk-shaped recording medium 21 may be provided in the interior bottom surface of the lower case 11 to perform the positioning by the outer peripheral portion of the disk-shaped recording medium 21. Alternatively, the wall surface 12 of the lower case 11 is formed in accordance with a diameter of the disk-shaped recording medium 21, and with this arrangement, the storage positionof the disk inside of the lower case 11 maybe determined by the wall surface portion 12.

Furthermore, while in the aforementioned embodiment, it is described the case where a disk-shaped recording medium is used as the disk-shaped recording medium 21, the present invention is not limited to this, but can also be applied to a case where a card type recording medium having a rectangular outline shape is used.

### Industrial Applicability

The present invention can be applied to a disk storage case adapted to store and carry, for example, a disk-shaped recording medium and to the recording medium.

## Claims

1. A disk storage case having an approximatelybox-shaped first case that stores a disk-shaped recording medium and a second case that is pivotally supported by the first case to turn freely and makes the recording medium stored in the first case difficult to be removed by closing an opening of the first case, **characterized in that**:
the first case includes a supporting portion at an interior bottom surface for supporting one surface of the recording medium, and supports the one surface of the recording medium by the supporting portion to oppose the one surface to the interior bottom surface; and
the second case includes clamping and holding means for clamping and holding the recording medium supported by the supporting portion between the supporting portion and itself.

2. The disk storage case according to claim 1, **characterized in that**:
the first case includes case-interior positioning guide means for positioning a storage position inside of the first case for the recording medium.

3. The disk storage case according to claim 1, **characterized in that**:
the first case includes turning-direction positioning means for positioning by restricting the motion of the stored recording medium in a turning direction.

4. A recording medium formed into a disk shape having a center hole, provided with a recording area on at least one surface, and stored in a predetermined storage case, **characterized by** including
an engagement portion with which positioning means of the storage case is engaged, in a part other than the recording area.

5. The recording medium according to claim 4, **characterized in that**:
the engagement portion is a through hole penetrating from one surface to another surface.

6. The disk storage case according to claim 3, **characterized in that**:
the first case and/or the second case are/is formed of a transparent member, and the disk-shaped recording medium stored in the first and second cases is able to be seen from outside through the first case and/or the second case; and
the turning-direction positioning means is set to be a reference position if a surface of a label described on the disk-shaped recording medium is seen from outside when the disk-shaped recording medium is stored in the case.
